## Europäisches Patentamt
## European Patent Office
## Office européen des brevets

(19) ☍))

(11) Numéro de publication: **0 062 552**
**B1**

(12) # FASCICULE DE BREVET EUROPEEN

(45) Date de publication du fascicule du brevet:
**31.07.85**

(51) Int. Cl.⁴: **F 16 K 17/40,** F 16 K 3/316

(21) Numéro de dépôt: **82400438.6**

(22) Date de dépôt: **11.03.82**

(54) **Vanne pyrotechnique d'obturation ultrarapide.**

(30) Priorité: **03.04.81 FR 8106703**

(43) Date de publication de la demande:
**13.10.82 Bulletin 82/41**

(45) Mention de la délivrance du brevet:
**31.07.85 Bulletin 85/31**

(84) Etats contractants désignés:
**CH DE GB IT LI SE**

(56) Documents cités:
**FR - A - 1 520 445**
**FR - A - 2 369 479**
**US - A - 3 358 961**
**US - A - 3 372 900**
**US - A - 3 559 948**

(73) Titulaire: **Société PYROMECA, Chemin de la Roquette,
F-83000 Toulon (FR)**

(72) Inventeur: **Gouallec, Roger, Résidence l'Eolienne
A1, Boulevard de la Martille, F-83000 Toulon (FR)**
Inventeur: **Gouallec, Jean-Pierre, 2, rue Revest,
F-83100 Toulon (FR)**

(74) Mandataire: **Pech, Bernard et al, Sté nationale des
poudres et explosifs 12, quai Henri IV, F-75181 Paris
Cédex 04 (FR)**

BUNDESDRUCKEREI BERLIN

## Description

L'invention concerne les vannes pyrotechniques normalement ouvertes et à passage direct pour obturer une canalisation de gaz, ces vannes permettant très rapidement d'obtenir une fermeture étanche, et comportant un corps de vanne, et un obturateur qui se déplace perpendiculairement à l'axe de passage sous l'effet d'une charge pyrotechnique.

Les vannes pyrotechniques d'obturation correspondant au piéambule de la revendication 1 et dont d'obturateur se déplace perpendiculairement à l'axe de la canalisation sont connues et, par exemple, le FR-A-1 520 445 décrit une vanne dont la fermeture peut-être obtenue, soit par la rotation d'un volant de manœuvre, soit par la mise à feu d'une charge pyrotechnique. Dans le cas du fonctionnement pyrotechnique, qui correspond à la nécessité d'une fermeture très rapide pour des raisons de sécurité, la cartouche qui contient la charge pyrotechnique est mise à feu, et les gaz générés propulsent un piston qui est solidaire d'un obturateur conique, cet obturateur venant se bloquer sur le siège conique qui est ménagé dans le corps de la vanne au niveau des ouvertures d'admission et d'expulsion.

Lorsqu'il est nécessaire d'obtenir une fermeture étanche très rapide, de telle vannes ne peuvent fonctionner qu'une seule fois, car le choc brutal entre l'obturateur conique et le siège du corps de la vanne risque d'entrainer des déformations pemanentes des surfaces en contact qui doivent assurer l'étanchéité. De plus, si de telles vannes sont adaptées à la fermeture de canalisations de petit diamètre, elles ne permettent que difficilement la fermeture très rapide de canalisations d'un diamètre supérieur à 50 millimètres car l'obturateur conique présente alors une masse trop importante dont l'inertie nécessiterait l'utilisation d'une charge pyrotechnique trop importante qui conduirait à un choc très brutal, et même dangereux, au moment où l'obturateur frappe le siège du corps de la vanne.

La présente invention, telle qu'elle est caractérisée dans la revendication 1, a pour but de permettre la fermeture ultrarapide de canalisations, notamment de canalisations dont le diamètre est supérieur à 50 millimètres, et même 100 millimètres, tout en permettant la réutilisation de cette vanne, sans nécessiter de réusinage des portées d'étanchéité.

Préférentiellement l'extrémité de la plaque mince qui est engagée entre les conduits est chanfreinée, selon un méplat ou selon une surface courbe, et cette plaque mince est avantageusement chanfreinée sur chacune de ses faces.

Plus particulièrement, le conduit d'expulsion est muni d'un joint périphérique qui est au contact de la plaque mince réalisée en matériau rigide, mais selon une autre possibilité, la surface de la plaque mince rigide que est située du côté de l'ouverture d'expulsion est recouverte d'un matériau souple d'étanchéité, et le bord du conduit d'expulsion en contact avec cette plaque mince est légèrement arrondi selon une forme torique qui facilite le déplacement de la plaque mince et améliore l'étanchéité en limitant la portée de cette plaque sur ce bord du conduit d'expulsion.

Selon une mise en œuvre particulière, l'extrémité de la plaque mince, qui est engagée entre les conduits, comporte une échancrure centrale qui correspond sensiblement aux conduits d'admission et d'expulsion, ce qui permet d'augmenter la surface initiale de guidage de la plaque mince d'obturation, sans introduire de pertes de charge.

Avantageusement, lorsque la plaque mince d'obturation présente un grand élancement notamment, l'extrémité de commande de la plaque mince est reliée à une tige de piston qui comporte un épaulement de guidage initial, ce qui facilite l'autocentrage de cette plaque entre les conduits d'admission et d'expulsion, et ce qui améliore l'étanchéité finale en facilitant l'application de la plaque mince sur le conduit d'expulsion sous l'effet de la pression des gaz qui règne au niveau du conduit d'admission.

Afin de réduire la masse de l'ensemble mobile, l'épaisseur de la plaque mince est avantageusement réduite au quinzième ou au vingtième du diamètre interne, lorsque la pression des gaz qui règne au niveau du conduit d'admission le permet, cette plaque mince pouvant de plus être réalisée en titane ou en alliage d'aluminium tel que le duralumin.

Pour permettre l'utilisation d'une plaque mince entrainée a très grande vitesse sous l'effet de la charge pyrotechnique, sans pour autant endommager l'extrémité de cette plaque qui est engagée entre les conduits, il est avantageux d'utiliser un amortisseur de fin de course de cette plaque, cet amortisseur étant positionné par une bride, qui comporte une fente en correspondance avec cette plaque mince, et qui est interposée entre cet amortisseur et les conduits du corps de la vanne. Plus particulièrement, lorsque la plaque mince d'obturation comporte une échancrure centrale ménagée à l'extrémité engagée entre les conduits, cet amortisseur est alors constitué de deux blocs de matériau ductile qui sont disposés de part et d'autre de cette échancrure. Selon une mise en œuvre particulièrement avantageuse, l'invention est utilisée à la réalisation de vannes pyrotechniques dont le diamètre interne du conduit d'expulsion est supérieure à 50 millimètres, et même 100 millimètres.

Les avantages obtenus grâce à cette invention consistent essentiellement en ce que la masse réduite de l'obturateur permet d'obtenir une très grande rapidité d'obturation, sans utiliser de charges pyrotechniques plus importantes que celles qui étaient utilisées dans les vannes antérieurement à la présente invention. Les différents essais réalisés au cours de la recherche ont ainsi permis de montrer qu'il est maintenant possible de déplacer un obturateur de canalisation d'un diamètre interne de 150 millimètres en moins de 5 millisecondes, tout en obtenant une étanchéité finale totale qui résulte de la non dégradation des pièces actives de la vanne au cours de ce fonctionnement ultrarapide, les seules pièces à changer pour effectuer la remise en état de la vanne étant la cartouche pyrotechnique d'actionnement du vérin, et l'amortisseur de fin de course.

Dans ce qui suit, l'invention est exposée plus en détail à l'aide des dessins représentant un mode particulier d'exécution pour lequel:

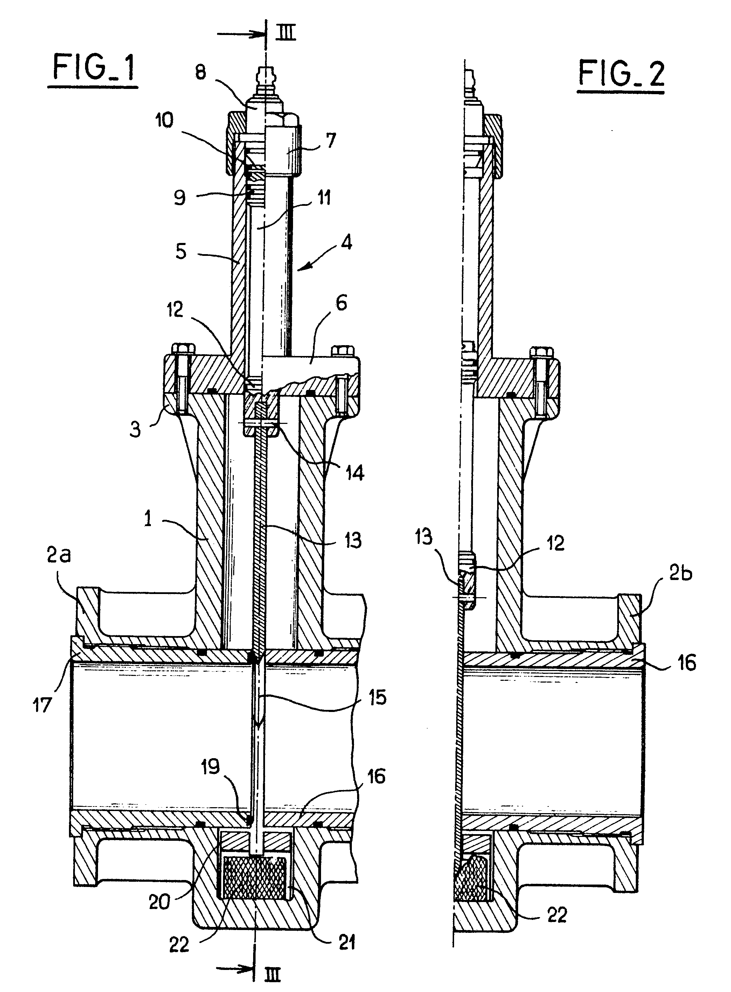

— la figure 1 est une vue frontale partielle, en coupe partielle selon les plans de coupe brisée I-I indiqués à la figure 3, et dont le plan de coupe principal passe par l'axe du vérin pyrotechnique et par l'axe des conduits d'admission et d'expulsion, cette vue partielle correspondant à la vanne en position initiale/ouverte;

— la figure 2 est une demi-vue frontale droite en coupe semblable à la figure 1, la vanne étant représentée en position finale/fermée;

— la figure 3 est une vue latérale en demi-coupe gauche partielle selon le plan de coupe III-III indiqué à la figure 1, qui est le plan médian de la plaque mince d'obturation, et qui passe par l'axe du vérin pyrotechnique, la vanne étant représentée dans la position initiale ouverte de la figure 1.

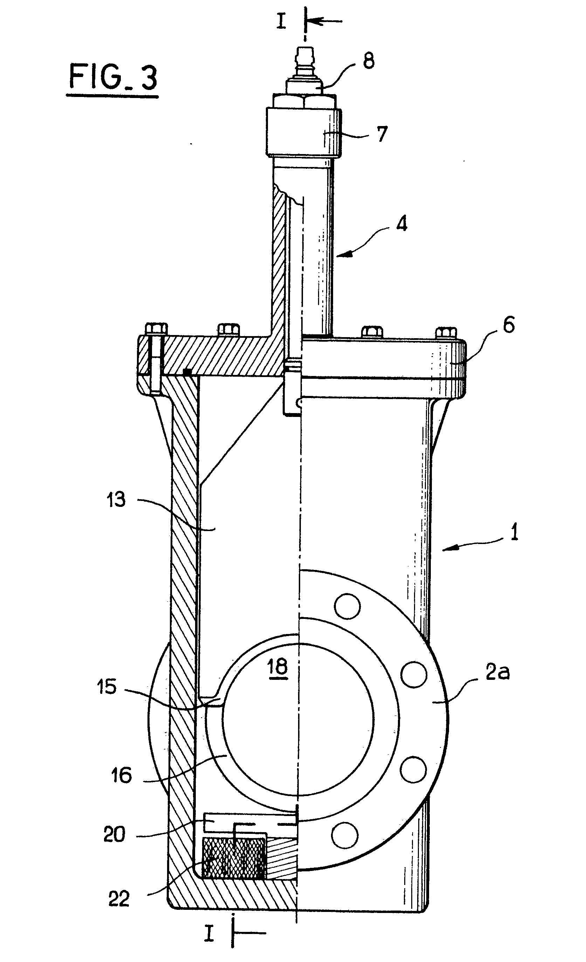

Selon les dessins, le dispositif d'obturation est réalisé à partir d'un corps de vanne (1) en alliage léger moulé renforcé par quatre nervures, qui est muni de deux brides latérales (2a) et (2b) pourvues chacune de huit trous de fixation sur la canalisation d'écoulement de gaz, et qui comporte une embase supérieure (3) sur laquelle est rapporté au moyen de douze vis le vérin pyrotechnique (4). Ce vérin est constitué d'un cylindre (5) qui surmonte la bride rectangulaire (6) adaptée à l'embase, (3) et se termine par l'écrou épaulé (7) qui assure la fixation de la cartouche pyrotechnique (8) permettant la fermeture étanche de l'extrémité supérieure du cylindre. Cette cartouche est en contact avec la tête (9) du piston placé à l'intérieur du cylindre, et ce piston est temporairement immobilisé en translation au moyen de la bague (10) qui prend appui sur l'épaulement du chambrage terminal du cylindre, et qui est temporairement solidarisée à la tête (9) du piston au moyen d'une goupille de cisaillement calibrée. La tige (11) du piston est munie d'un épaulement de guidage initial (12) qui est engagé à l'extrémité inférieure du cylindre et qui comporte un embrèvement diamétral dans lequel est fixée la plaque mince d'obturation (13) au moyen de la goupille transversale (14). L'extrémité (15) de la plaque mince, qui est engagée entre le conduit d'admission (16) et le conduit d'expulsion (17), comporte une échancrure (18, figure 3) dont le profil correspond exactement au diamètre interne des conduits d'admission et d'expulsion, et cette extrémité de la plaque mince comporte un chanfrein sur chacune des faces de la plaque qui est en duralumin poli.

Les deux conduits (16) et (17) sont en acier inoxydable et sont rapportés sur le corps de vanne (1) par vissage direct, le conduit d'expulsion (17) étant pourvu d'un joint torique (19) qui est maintenu dans une gorge ménagée dans l'épaisseur de ce conduit, et qui dépasse légèrement de l'extrémité de ce conduit de manière à être comprimé lorsque la plaque mince d'obturation est en position de fermeture. Ces conduits (16) et (17) assurent également le maintien en position de la bride en T fendue (20) qui est placée dans le logement d'amortissement (21) du corps de la vanne, et qui assure elle-même le maintien des deux cylindres de plomb (22) qui permettent l'amortissement de la plaque mince d'obturation en fin de course.

Pour une vanne d'un poids total de 86 kilogrammes conforme aux dessins annexés, et dont le diamètre intérieur des conduits d'admission et d'expulsion est de 150 millimètres, la plaque mince d'obturation ne mesure que 10 millimètres d'épaisseur et ne pèse que 1,3 kilogrammes, le poids total de l'ensemble mobile étant de 1,9 kilogrammes, ce qui permet d'obtenir une durée totale de fonctionnement de l'obturateur de 5 millisecondes, tout en ayant une étanchéité très satisfaisante jusqu'à une pression de 40 bars, les taux de fuites mesurés au cours des différents essais étant toujours inférieurs à $10^{-4}$ cm³/s. sous une pression d'air de 30 bars. Cette durée totale de fonctionnement de l'obturateur de 5 ms est obtenue avec une cartouche pyrotechnique dont la charge est constituée essentiellement par 1,3 grammes de poudre poreuse à base de nitrocellulose dont la mise à feu est assurée par un allumeur ultrarapide initiable électriquement.

Un tel dispositif d'obturation permet par exemple un isolement ultrarapide de deux enceintes qui contiennent des gaz réactifs, ou des gaz contenant des produits indésirables du fait d'un accident survenu en amont de la canalisation de gaz sur laquelle est rapportée la vanne selon la présente invention. Une telle vanne est également adaptable sur des canalisations de transfert de liquide, à la condition qu'au moment de la fermeture le liquide soit statique ou s'écoule à très faible vitesse.

**Revendications**

1. Vanne pyrotechnique normalement ouverte et à passage direct pour obturer une canalisation, la vanne comportant un corps de vanne (1), et un obturateur (13) qui se déplace perpendiculairement à l'axe de passage sous l'effet d'une charge pyrotechnique (8), caractérisée en ce que:

— à l'intérieur du corps (1) sont fixés coaxialement à l'axe de passage, des conduits d'admission (16) et d'expulsion (17) dont les extrémités qui sont montées adjacentes, forment les sièges pour l'obturateur et le guident pendant son déplacement.
— l'obturateur est une plaque mince (13) dont l'épaisseur est inférieure au dixième du diamètre interne du conduit d'expulsion (17),
— ladite plaque mince (13) est déjà engagée avant le début de son déplacement de fermeture entre lesdits conduits (16, 17),
— le corps (1) comporte un amortisseur (22) de fin de course pour la plaque mince (13).

2. Dispositif pyrotechnique d'obturation selon la revendication 1, caractérisé en ce que l'extrémité (15) de la plaque mince (13) qui est engagée entre les conduits est chanfreinée.

3. Dispositif pyrotechnique d'obturation selon l'une des revendications 1 ou 2, caractérisé en ce que l'extrémité (15) de la plaque mince qui est engagée entre les conduits, comporte une échancrure centrale qui correspond sensiblement aux conduits d'admission (16) et d'expulsion (17).

4. Dispositif pyrotechnique d'obturation selon l'une des revendications 1 à 3 caractérisé en ce que l'extrémité de commande de la plaque mince est reliée à une tige (11) de piston qui comporte un épaulement de guidage initial (12).

5. Dispositif pyrotechnique d'obturation selon l'une des revendications 1 ou 3, caractérisé en ce que l'amortisseur de fin de course de la plaque mince est positionné par une bride (20) qui comporte une fente en correspondance avec cette plaque mince et qui est interposée entre cet amortisseur (22) et les conduits du corps de la vanne.

6. Dispositif pyrotechnique d'obturation selon l'une des revendications 1 à 3 ou 5, caractérisé en ce que l'épaisseur de la plaque mince (13) est inférieure au vingtième du diamètre interne du conduit d'expulsion (17).

7. Dispositif pyrotechnique d'obturation selon l'une des revendications 1, 3 ou 6, caractérisé en ce que le diamètre interne du conduit d'expulsion (17) est supérieur à 50 millimètres.

**Patentansprüche**

1. Sprengladungsbetätigtes normalerweise geöffnetes Ventil mit direktem Durchgang zum Absperren einer Rohrleitung mit

— einem Ventilkörper (1) und
— einem sich unter der Einwirkung einer Sprengladung (8) senkrecht zur Durchlaßachse bewegendes Absperrorgan (13),
dadurch gekennzeichnet, daß
— Zu- und Abführleitungen (16, 17) im Inneren des Ventilkörpers (1) koaxial zur Achse des Durchgangs befestigt sind, wobei die benachbarten Enden der Rohrleitungen einen Sitz für das Absperrorgan bilden und dieses während dessen Verschiebung führen,
— das Absperrorgan eine dünne Platte (13) ist, mit einer Dicke, die kleiner als ein Zehntel des Innendurchmessers der Abführleitung (17) ist,
— diese dünne Platte (13) bereits vor dem Beginn ihrer Schließbewegung zwischen den Rohrleitungen (16, 17) eingreift und
— der Ventilkörper (1) einen Endstellungsdämpfer (22) für die dünne Platte (13) aufweist.

2. Ventil nach Anspruch 1, dadurch gekennzeichnet, daß das zwischen die Rohrleitungen eingreifende Ende (15) der dünnen Platte (13) abgeschrägt ist.

3. Ventil nach Anspruch 1 oder 2, dadurch gekennzeichnet, daß das zwischen die Rohrleitungen eingreifende Ende (15) der dünnen Platte einen zentralen bogenförmigen Ausschnitt aufweist, der im wesentlichen an die Zu- und Abführleitungen (16, 17) angepaßt ist.

4. Ventil nach einem der Ansprüche 1 bis 3, dadurch gekennzeichnet, daß das Steuerende der dünnen Platte mit einer Kolbenstange (11) mit einer Schulter (12) zur anfänglichen Führung verbunden ist.

5. Ventil nach einem der Ansprüche 1 bis 3 oder 6, dadurch gekennzeichnet, daß die Dicke der dünnen Platte (13) kleiner als ein Zwanzigstel des Innendurchmessers der Abführleitung (17) beträgt.

6. Ventil nach einem der Ansprüche 1 oder 3, dadurch gekennzeichnet, daß der Endstellungsdämpfer der dünnen Platte mittels eines Flansches (20) positioniert ist, der einen an die dünne Platte angepaßten Schlitz aufweist und der zwischen diesem Dämpfer (22) und den Rohrleitungen des Ventilkörpers angeordnet ist.

7. Ventil nach einem der Ansprüche 1, 3 oder 5, dadurch gekennzeichnet, daß der Innendurchmesser der Abführleitung (17) größer als 50 mm ist.

**Claims**

1. Normally open, direct-flow pyrotechnic valve for sealing off a pipe, the valve comprising a valve body (1) and a shutter (13) which moves perpendicularly to the axis of flow under the action of a pyrotechnic charge (8), characterised in that:

— inside the body (1) are fixed, coaxially to the axis of flow, an inlet pipe (16) and an outlet pipe (17), the adjacent ends of which form seats for the shutter and guide it during its movement;
— the shutter is a thin plate (13), the thickness of which is less than one tenth of the internal diameter of the outlet pipe (17);
— the said thin plate (13) is already engaged before the start of its closing movement, between the said pipes (16, 17);
— the body (1) comprises an end-of-travel damper (22) for the thin plate (13).

2. Pyrotechnic sealing device according to Claim 1, characterised in that the end (15) of the thin plate (13) which is engaged between the pipes is chamfered.

3. Pyrotechnic sealing device according to either one of Claims 1 or 2, characterised in that the end (15) of the thin plate which is engaged between the pipes has a central cut-out portion which corresponds substantially to the inlet pipe (16) and the outlet pipe (17).

4. Pyrotechnic sealing device according to one of Claims 1 to 3, characterised in that the actuating end of the thin plate is connected to a piston rod (11) which has an initial guiding shoulder (12).

5. Pyrotechnic sealing device according to one of Claims 1 to 3 or 6, characterised in that the thickness of the thin plate (13) is less than one twentieth of the internal diameter of the outlet pipe (17).

6. Pyrotechnic sealing device according to either one of Claims 1 or 3, characterised in that the end-of-travel damper for the thin plate is positioned by a flange (20) which has a slot corresponding to this thin plate and which is located between this damper (22) and the pipes of the valve body.

7. Pyrotechnic sealing device according to one of Claims 1, 3 or 5, characterised in that the internal diameter of the outlet pipe (17) is greater than 50 millimetres.

FIG_1

FIG_2

FIG. 3